# EUROPEAN PATENT APPLICATION

(11) **EP 2 624 553 A2**
(43) Date of publication of application: **07.08.2013**
(21) Application number: 13150142.1
(22) Date of filing: 03.01.2013
(51) Int. Cl.: H04N 7/18

(54) **Method for providing user interface and video receiving apparatus thereof**

(30) Priority: 31.01.2012 KR 20120009758
(71) Applicant: Samsung Electronics Co., Ltd, Gyeonggi-do 443-742 (KR)
(72) Inventor: Yoon, Soo-yeoun, Seoul (KR); Cho, Bong-hyun, Gyeonggi-do (KR); Choi, Jun-sik, Gyeonggi-do (KR)
(74) Representative: Brandon, Paul Laurence

(57) **Abstract**

A method for providing a user interface (UI) and a video receiving apparatus using the same are provided. According to the method for providing the Ul, a video is received and displayed, one from among a plurality of persons appearing in the video is selected, user motion is photographed, a motion similarity is calculated between the photographed user motion and the motion of the selected person, and information relating to the calculated motion similarity is displayed on the Ul. The user can watch the video, exercise without having to use the game terminal or the sensor, and can check his or her exercise information.

## Description

### CROSS-REFERENCE TO RELATED APPLICATIONS

This application claims priority from Korean Patent Application No. 10-2012-0009758, filed on January 31, 2012, in the Korean Intellectual Property Office, the disclosure of which is incorporated herein by reference in its entirety.

### BACKGROUND

### 1. Field

Methods and apparatuses consistent with the disclosure provided herein relate to providing a user interface (UI) and a video receiving apparatus thereof, and more particularly, to a method for providing a UI which includes analyzing a motion of a photographed user and providing information regarding the user motion, and a video receiving apparatus using the same.

### 2. Description of the Related Art

As the population ages and obesity increases, concerns relating to health care are rapidly growing. In particular, a need to provide health care services, contents or applications analyzing a user's motion, and a need to provide information relating to the user's motion, such as exercise information, are increasing.

Further, there are an increasing number of exercising services via which a user can watch the displayed object motion and exercise by utilizing game terminals. However, a user who exercises according to the displayed object motion may require extra game terminals or sensors.

Because the user must separately buy the game terminals or sensors, the apparatus cost increases, and the user may also be required to install separate game terminals or sensors in the display apparatus.

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to one exemplary embodiment, a technical objective is to provide a method for providing a user interface (UI) and a video receiving apparatus using the same, which calculates a motion similarity between a motion of a person appearing in a received video and a user's motion, and providing the calculated result to the user.

In one exemplary embodiment, a method for providing a user interface (UI) may include displaying a video, selecting at least one from among a plurality of persons appearing in the video, photographing a motion of a user, calculating a motion similarity between the photographed motion of the user and a motion of the selected person, and displaying information relating to the calculated motion similarity on the UI.

The selecting may include extracting information relating to the plurality of persons appearing in the video, and displaying a list including the extracted information relating to the plurality of persons.

If the displayed video includes metadata regarding the plurality of persons, the displaying the list comprises displaying the information relating to the plurality of persons by using the metadata.

The extracting may include extracting the information relating to the plurality of persons appearing in the video by using facial recognition, searching for a person matching a recognized face in a storage unit, and if a person matching the recognized face is found, reading out information relating to the person matching the recognized face from the storage unit, and the displaying the list may include displaying a list including the information relating to the person matching the recognized face.

The calculating may include calculating the motion similarity by comparing a motion vector of an area of the displayed video at which the selected person appears with a motion vector of an area of the photographed motion of the user.

The calculating may include analyzing the displayed video and extracting a characteristic point of the selected person, extracting a characteristic point of the photographed user, and calculating the motion similarity by comparing a motion relating to the characteristic point of the selected person with a motion relating to the characteristic point of the photographed user.

The method may additionally include displaying a video relating to the photographed motion of the user on one area of a display screen.

The displaying may include displaying the selected person distinguishably from non-selected persons appearing in the video.

The method may additionally include calculating information relating to an exercise of the photographed user, and displaying the calculated information relating to the exercise of the photographed user on the UI.

The method may additionally include storing at least one of: the information relating to the calculated motion similarity; information relating to the selected person; data relating to the photographed motion of the user; and the information relating to the exercise of the photographed user. Further, a non-transitory computer readable recording medium having recorded thereon instructions for causing a computer to execute any of the above methods may additionally be provided.

In one exemplary embodiment, a video receiving apparatus may include a photographing unit which photographs a user, a video receiving unit which receives a video, a display unit which displays the received video, a user input unit which receives at least one command from the user, and a control unit which selects at least one from among a plurality of persons appearing in the video based on the received at least one command, calculates a motion similarity between a motion of the user which is photographed by using the photographing unit and a motion of the selected person, and controls the display unit to display information relating to the calculated motion similarity on a user interface (UI).

The control unit may extract information relating to the plurality of persons appearing in the video, generate a list including the extracted information relating to the plurality of persons, and display the generated list on the display unit.

If the received video includes metadata regarding the plurality of persons, the control unit may control the display unit to display the information relating to the plurality of persons by using the metadata.

The video receiving apparatus may additionally include a storage unit which stores information relating to persons, and the control unit may extract information relating to the plurality of persons appearing in the video by using facial recognition, search for information relating to a person matching a recognized face in the storage unit, and if the information relating to the person matching the recognized face is found, read out the information relating to the person matching the recognized face from the storage unit, and control the display unit to display a list including the information relating to the person matching the recognized face.

The control unit may calculate the motion similarity by comparing a motion vector of an area of the received video at which the selected person appears with a motion vector of an area of the photographed motion of the user.

The control unit may analyze the received video and extract a characteristic point of the selected person, extract a characteristic point of the photographed user, and calculate the motion similarity by comparing a motion relating to the characteristic point of the selected person with a motion relating to the characteristic point of the photographed user.

The control unit may control the display unit to display a video relating to the photographed motion of the user on one area of a display screen.

The control unit may control the display unit to display the selected person distinguishably from non-selected persons appearing in the video.

The control unit may calculate information relating to an exercise of the photographed user, and control the display unit to display the information relating to the exercise on the UI.

The control unit may store, in a storage unit, at least one of: the information relating to the calculated motion similarity; information relating to the selected person; data relating to the photographed motion of the user; and the exercise information relating to the exercise of the user.

### BRIEF DESCRIPTION OF THE DRAWINGS

The above and/or other aspects of the present inventive concept will be more apparent by describing certain exemplary embodiments of the present inventive concept with reference to the accompanying drawings, in which:

FIG. 1 is a block diagram illustrating a video receiving apparatus, according to an exemplary embodiment;

FIGS. 2, 3, and 4 are views which illustrate a method for selecting a person included in the video content, according to various exemplary embodiments;

FIGS. 5, 6, 7, and 8 are views which illustrate a user interface (UI) including at least one of motion similarity information and exercise information, according to various exemplary embodiments; and

FIG. 9 is a flowchart which illustrates a method for providing motion similarity information displayed on a UI, according to an exemplary embodiment.

### DETAILED DESCRIPTION OF EXEMPLARY EMBODIMENTS

Referring to the drawings, the present inventive concept will be described in detail below.

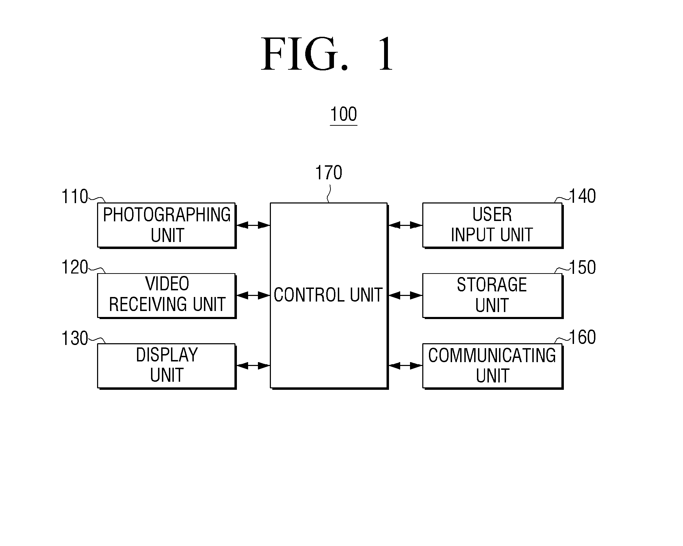

FIG. 1 is a block diagram illustrating a video receiving apparatus 100, according to an exemplary embodiment. Referring to FIG. 1, the video receiving apparatus 100 may include a photographing unit 110, a video receiving unit 120, a display unit 130, a user input unit 140, a storage unit 150, a communicating unit 160, and a control unit 170. The video receiving apparatus 100 may be, for example, a television (TV), a desktop personal computer (PC), a tablet PC, a laptop computer, a cellular phone, or a personal digital assistant (PDA), but not limited to the specific examples.

The photographing unit 110 may receive photographed video signals relating to the user motion, such as, for example, successive frames, and provide these signals to the control unit 170. For instance, the photographing unit 110 may be implemented as a camera unit which may include a lens and an image sensor. Further, the photographing unit 110 may alternatively be integrated with the video receiving unit 100 or provided separately. The separated photographing unit 110 may be connected to the video receiving apparatus 100 via a wire or via a wireless network. In particular, if the video receiving apparatus 100 is the TV, the photographing unit 110 may be placed on the upper part of the bezels surrounding the video receiving apparatus 100.

The video receiving unit 120 may receive the video from various sources, such as, for example, a broadcasting station or an external device. In particular, the video receiving unit 120 may receive broadcasting images from the broadcasting station, or receive contents from the external device such as a digital video disk (DVD) player. The video receiving unit may be embodied as, for example, a receiver, or any device or hardware component which is configured to receive a radio frequency (RF) signal.

The display unit 130 may display the video signals processed by the video signal processor (not illustrated) which is controlled by the control unit 170. The display unit 130 may display various information on the user interface (UI), including video from various sources. The display unit may be embodied as, for example, a liquid crystal display (LCD) panel, or any device or hardware component which is configured to display video images.

The user input unit 140 may receive the user manipulation to control the video receiving apparatus 100. The user input unit 140 may utilize an input device, such as, for example, a remote control unit, a touch screen, or a mouse.

The storage unit 150 may store the data and programs which are employed in order to implement and control the video receiving apparatus 100. In particular, the storage unit 150 may store information relating to persons in order to facilitate searching for a plurality of persons appearing in the video by utilizing facial recognition. The information relating to persons may include, for example, thumbnail images, names, and body images of the persons, however, may not be limited to the foregoing.

The communicating unit 160 may facilitate communication between an external device or external server and the apparatus 100. The communicating unit 160 may utilize a communicating module, such as, for example, an Ethernet device, a Bluetooth device, or a wireless fidelity (Wi-Fi) device.

The control unit 170 may control the overall operation of the video receiving apparatus 100 based on user manipulation received via the user input unit 140. In particular, the control unit 170 may calculate a motion similarity between the user motion photographed by the photographing unit 110 and the motion of a person selected from the displayed video, and control the display unit 130 to display the calculated motion similarity information on the UI. The control unit may be embodied, for example, as an integrated circuit or as dedicated circuitry, or as a microprocessor which is embedded on a semiconductor chip.

In particular, the display unit 130 may display a video including a plurality of persons appearing therein, user manipulation which cause a start of the exercise motions may be received via the user input unit 140, and the control unit 170 may extract information relating to a plurality of persons appearing in the displayed video.

The control unit 170 may extract the information relating to a plurality of persons after analyzing the pixels of the received video frames, and/or by utilizing at least one of the metadata included in the received video and the information relating to persons which is pre-stored in the storage unit 150.

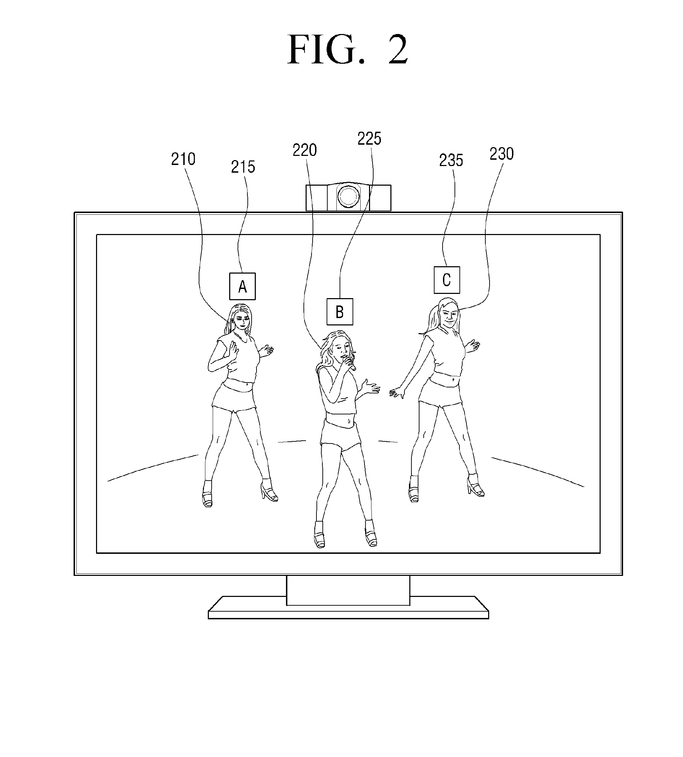

For instance, the control unit 170 may analyze the pixel color or the pixel motion of the pixels of the received video frames in order to extract the information relating to the plurality of persons. If the information relating to the plurality of persons is extracted, referring to FIG. 2, the control unit 170 may display icons 215, 225, 235 to respectively identify the plurality of corresponding persons 210, 220, 230. Referring to FIG. 2, the icons may be identified, for example, by using letters of the alphabet, however, the form of icon identification may not be limited to the foregoing. Accordingly, the icons may be identified by using, for example, numbers, symbols, or person names, or any other suitable type of identifier.

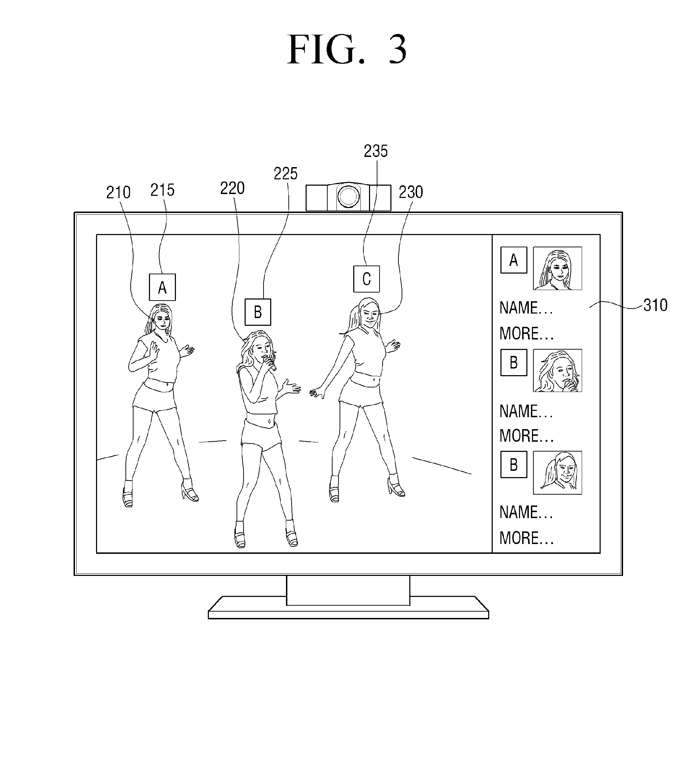

Further, if the information relating to the plurality of persons is extracted by utilizing the metadata of the video contents and the pre-stored information relating to persons, referring to FIG. 3, the control unit 170 may generate a list 310 which includes the extracted information relating to the plurality of extracted persons 210, 220, 230, and display this list 310 on the display unit 130.

The list 310 may include information relating to each of a plurality of persons 210, 220, 230, such as, for example, thumbnail images or names. The information included in the list 310 may be extracted by utilizing the metadata included in the video and/or the information relating to persons which is pre-stored in the storage unit 150. For instance, if the information relating to the plurality of persons is extracted by utilizing facial recognition, the control unit 170 may search for a person matching a recognized face in the storage unit 150. If a person matching the recognized face is found, the control unit 170 may read out information relating to the person matching the recognized face from the storage unit 150, and control the display unit 130 to display the list including the information relating to the person matching the recognized face.

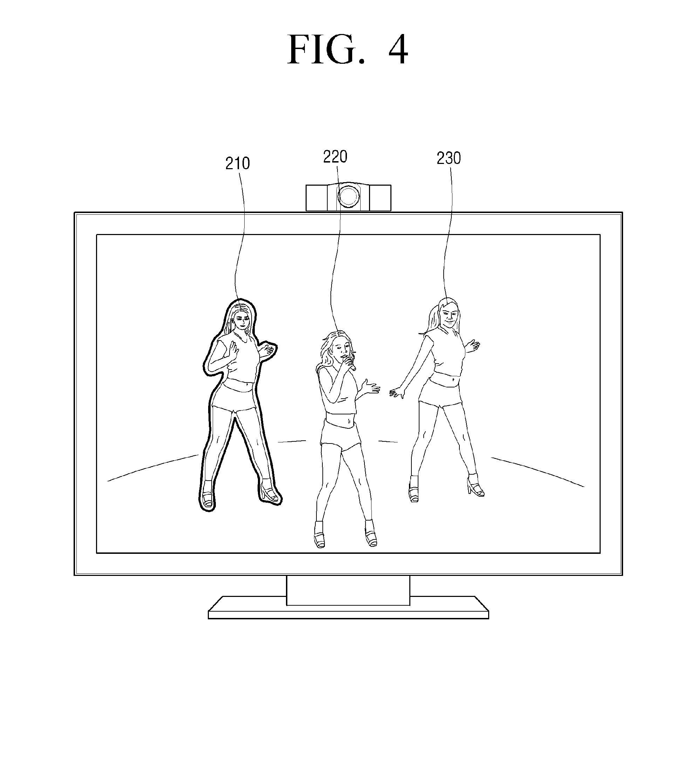

If user manipulation relating to a selection of one of a plurality of persons is received via the user input unit 140, the control unit 170 may mark the selected person from among the appearing persons. For instance, referring to FIG. 4, the control unit 170 may draw a line around the person 210 in order to highlight the selection for the benefit of the user. However, this is merely an exemplary embodiment; other methods for highlighting the selection, such as, for example, identifying the selected person by using a different color, may be utilized to mark the person from among the other persons.

The foregoing describes a plurality of persons appearing in the video. However, this is also merely one of the various exemplary embodiments; in an alternative exemplary embodiment, if the video includes one person, the control unit 170 may automatically select the one included person.

If one person is selected, the control unit 170 may calculate the motion similarity by comparing the motion of the selected person and the user motion which is photographed by the photographing unit 110.

In particular, the control unit 170 may calculate the motion similarity by comparing a motion vector of an area of the video at which the selected person appears and a motion vector of an area of the photographed motion of the user.

Further, the control unit 170 may extract characteristic points of the selected person by analyzing the received video, and extract the characteristic points of the user from the photographed motion of the user obtained by the photographing unit 110. The control unit 170 may compare the motion of the selected person relating to the characteristic points of the selected person with the photographed motion of the user relating to the characteristic points of the photographed user, in order to calculate the motion similarity.

Further, if pattern information relating to the persons included in the received video can be determined, the control unit 170 may analyze a pattern relating to the photographed user motion. The control unit 170 may compare the pattern information relating to the persons included in the received video with the analyzed pattern relating to the photographed user motion, and calculate the corresponding motion similarity by using a result of the comparison.

The control unit 170 may calculate the motion similarity between the photographed user motion and the motion of the selected person at pre-determined time intervals, such as, for example, every second.

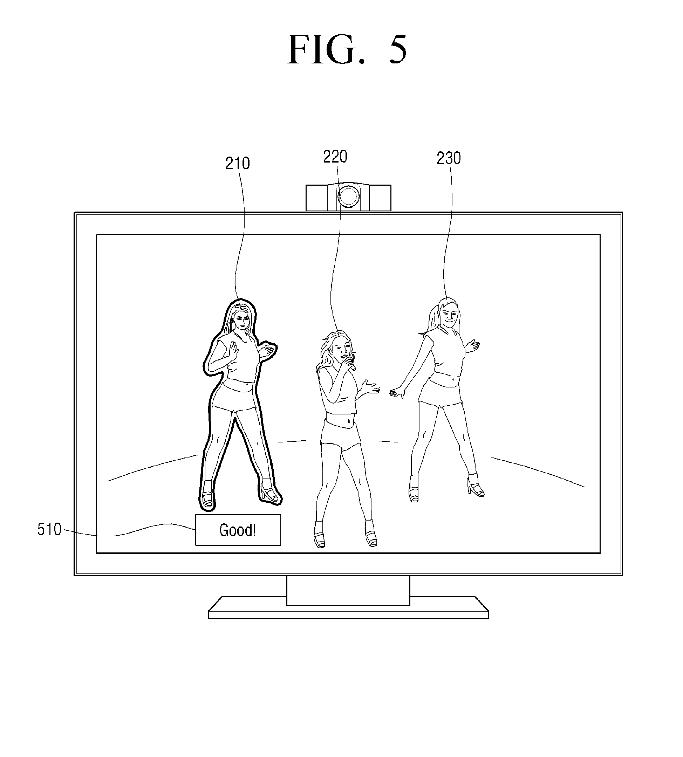

The control unit 170 may control the display unit 130 to generate information relating to the calculated motion similarity and to display the generated information on the UI. Referring to FIG. 5, in the UI 510, the calculated motion similarity may be marked as pre-determined steps. For instance, in an exemplary embodiment, if the motion similarity is determined to be lower than 30%, the control unit 170 may display the motion similarity information as "bad" in the UI 510. If the motion similarity is determined to be more than 30% and lower than 60%, the control unit 170 may display the motion similarity information as "normal" in the UI 510. If the motion similarity is more than 60% and lower than 90%, the control unit may display the motion similarity information as "good" in the UI 510. If the motion similarity is more than 90% and lower than 100%, the control unit 170 may display the motion similarity information as "great" in the UI 510.

The UI 510 illustrated in FIG. 5 may include the motion similarity information marked in four steps. However, this is one of the various exemplary embodiments; in alternative exemplary embodiments, other steps relating to identifying the motion similarity information may be included, and the calculated motion similarity may be displayed accordingly.

In an exemplary embodiment, if the motion similarity is calculated at pre-determined time intervals, such as, for example, every second, the control unit 170 may update the motion similarity information included in the Ul at the pre-determined time intervals. Further, the control unit 170 may supplementarily update the motion similarity information when the selected person's motion changes.

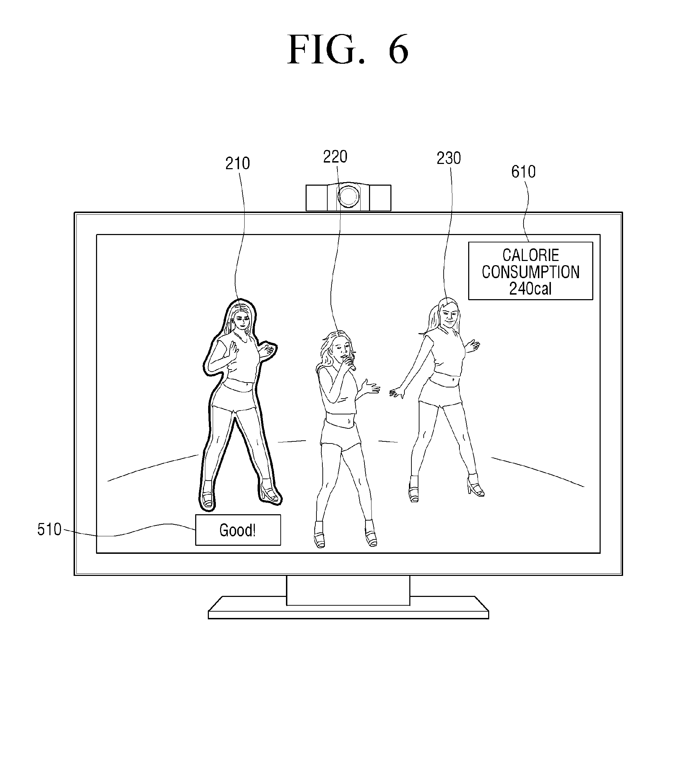

Referring to FIG. 6, the control unit 170 may provide an additional UI 610 which includes exercise information relating to the user on one side of the display, such as, for example, an upper right portion of a screen of the display unit 130, in addition to providing the UI 510 which includes the motion similarity information.

In particular, the control unit 170 may calculate the exercise information by utilizing the metadata included in the video. If the user exercises while watching the motion relating to the person included in the video, information relating to an amount of calories resulting from the exercise, averaged by hour, may be stored in the metadata. For instance, if the user exercises while watching the motion of a person included in the program A, the metadata may include information which reads that approximately 1,000 calories may be burned in an hour. If the user exercises for 30 minutes while watching the motion of the person included in the program A, the control unit 170 may calculate the number of calories burned as 1,000 calories per hour x 0.5 hours = 500 cal. Further, the control unit 170 may control the display unit 130 to display exercise information, including the calculated number of calories burned during the exercise, on the UI 610.

However, this is merely an exemplary embodiment. For instance, the control unit 170 may calculate the calorie consumption of the user in various manners. By way of example, the control unit 170 may measure the calorie consumption by using body pulses.

Referring to FIG. 6, the UI 610 includes the calorie consumption information. However, this is merely an exemplary embodiment. Accordingly, in an alternative exemplary embodiment, the UI 610 may include information relating to the exercise time or a name of a video which is being watched by the user.

Further, the control unit 170 may control the display unit 130 to display a video which includes the user motion photographed by the photographing unit 110 on one side of the displaying screen.

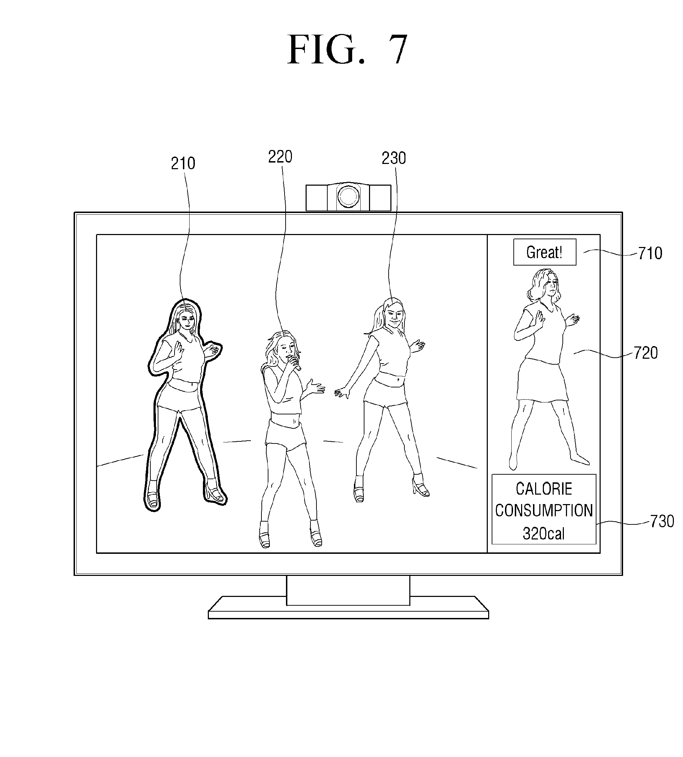

For instance, referring to FIG. 7, the control unit 170 may display the photographed user motion 720 on the right side of the display screen. The control unit 170 may display the motion similarity information 710 and the exercise information 730 together with the motion of the user 720.

FIG. 7 depicts an example in which the motion of the user 720 photographed by the photographing unit 110 is displayed on the right side of the displaying screen. However, this is merely an exemplary embodiment. Accordingly, in an alternative exemplary embodiment, the user motion may be displayed in another area of the display screen in Picture-in-Picture (PIP) form.

Further, if user manipulation relating to ending the exercise mode is received via user input unit 140, the control unit 170 may control the display unit 130 to remove the displayed UI on the displaying screen. The control unit 170 may store at least one of the motion similarity information, the information relating to the selected person, the data relating to the photographed user motion, and the exercise information in the storage unit 150.

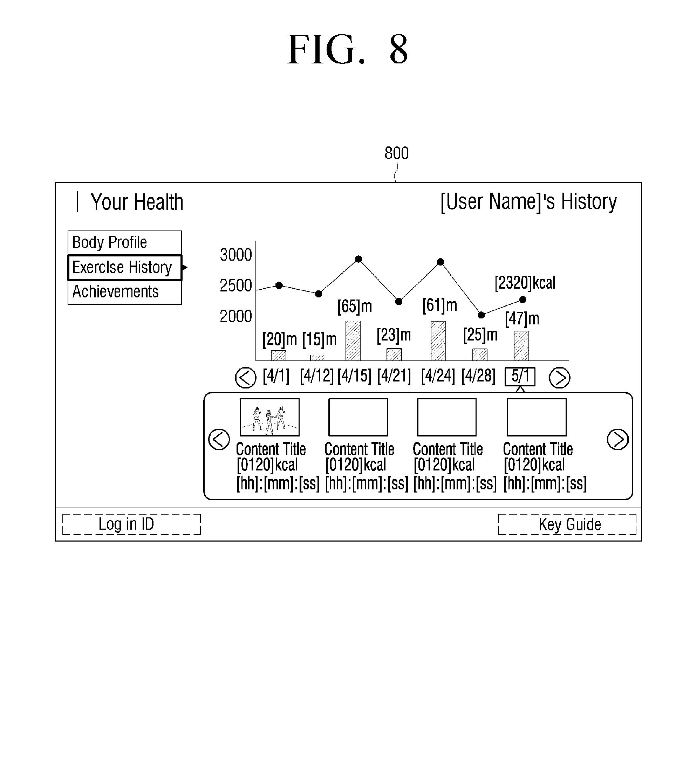

If user manipulation relating to checking the exercise information is received, referring to FIG. 8, the control unit 170 may cause the display unit 130 to display the UI 800, which includes information relating to managing the user's exercise. The UI 800 may include, for example, the historical information relating to calorie consumption and corresponding dates, video contents that the user was watching, and the calories the user burned while watching such video contents.

As described above, by utilizing the video receiving apparatus 100, a user may watch the video contents, exercise, and check his exercise information without having to use external game terminals and sensors.

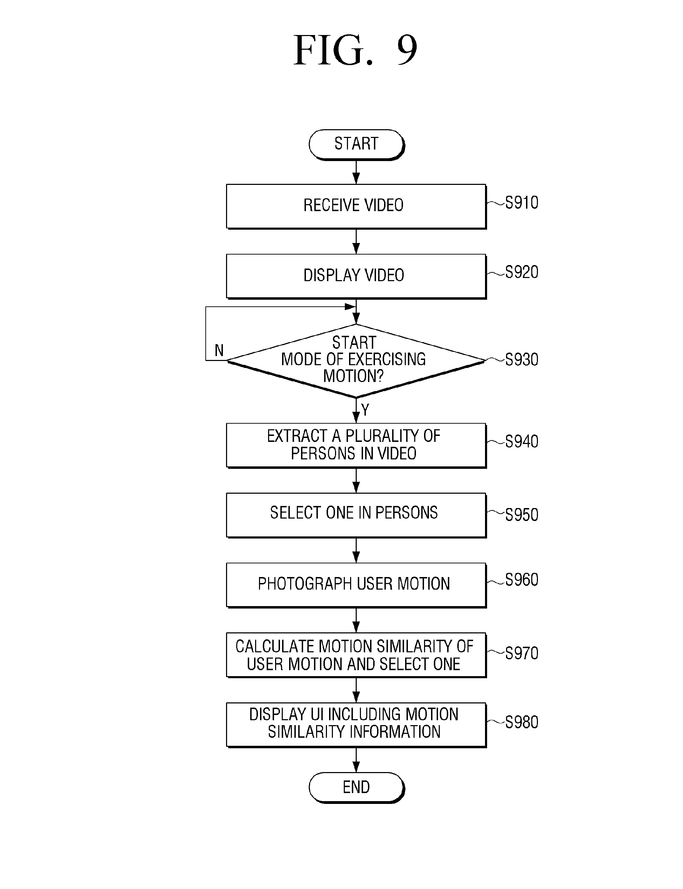

Referring to FIG. 9, a method which is performable by the video receiving apparatus 100 for providing the UI relating to the motion similarity will be described in detail below.

At operation S910, the video receiving apparatus 100 may receive video from any one or more of various sources. For instance, the video receiving apparatus 100 may receive broadcasting contents from a broadcasting station, and/or video contents from an external device, such as, for example, a DVD player. At operation S920, the video receiving apparatus 100 may process the signals of the received video and display the video.

At operation S930, the video receiving apparatus 100 may determine whether user manipulation relating to a start of an exercise mode of exercising motions has been received.

At S930-Y, if the user manipulation relating to the start of the exercise mode has been received, at operation S940, the video receiving apparatus 100 may extract information relating to a plurality of persons included in the video. After analyzing the pixels of the received video frames, the video receiving apparatus 100 may extract the information relating to the plurality of persons by utilizing at least one of the metadata included in the received video and the pre-stored information relating to persons stored in the storage unit 150. The video receiving apparatus 100 may display the list 310, including the extracted information relating to the plurality of persons, in order to facilitate a selection of one of the plurality of persons (see also FIG. 3).

At operation S950, the video receiving apparatus 100 may select one person from among the persons appearing in the video, based on the received user manipulation. Referring to FIG. 3, the video receiving apparatus 100 may select one person based on the received user manipulation by utilizing the list 310 which includes a plurality of persons. If one person is selected, the video receiving apparatus 100 may mark the selected person to distinguish from the other non-selected persons. At operation S960, the video receiving apparatus 100 may photograph the user motion by utilizing the photographing unit 110.

At operation S970, the video receiving apparatus 100 may calculate the motion similarity between the photographed user motion and the motion of the selected person. In particular, the video receiving apparatus 100 may compare the motion vector of the area at which the selected person appears with the motion vector of the area of the photographed motion of the user. Further, the video receiving apparatus 100 may analyze the received video, extract characteristic points of the selected person based on the analysis of the received video, and calculate the motion similarity by comparing the motion relating to characteristic points of the selected person with the motion relating to the characteristic points of the photographed user. The video receiving apparatus 100 may compare the features of the selected person and the features of the photographed user, and calculate the motion similarity based on a result of the comparison. If pattern information relating to the selected person is included in the received video, the video receiving apparatus 100 may analyze a pattern relating to the photographed user motion, compare the pattern information relating to the selected person included in the received video with information relating to the analyzed pattern from the photographed user motion, and calculate the motion similarity based on a result of the comparison.

At operation S980, the video receiving apparatus 100 may display the motion similarity information on the UI. For instance, the video receiving apparatus 100 may display at least one of the UI 510 and the UI 720 similarly as illustrated in FIGS. 5, 6, and 7. Further, the video receiving apparatus 100 may calculate the exercise information and display the exercise information on the UI 610 similarly as illustrated in FIGS. 6 and 7.

By implementing the foregoing method for providing the UI relating to the motion similarity, a user may watch the video contents, exercise without having to use the game terminal or the sensor, and check his or her exercise information.

The program code for implementing the method for managing the exercise according to the foregoing exemplary embodiments may be stored in the various types of the recoding medium. In particular, the recording medium may include any one or more of various types of recording medium readable at a terminal such as, for example, Random Access Memory (RAM), flash memory, Read Only Memory (ROM), Erasable Programmable ROM (EPROM), Electronically Erasable and Programmable ROM (EEPROM), a register, a hard disk, a removable disk, a memory card, universal serial bus (USB) memory, and compact disk-read only memory(CD-ROM).

The foregoing exemplary embodiments and advantages are merely exemplary and are not to be construed as limiting the present disclosure. In particular, the present inventive concept can be readily applied to other types of apparatuses. Further, the description of the exemplary embodiments of the present inventive concept is intended to be illustrative, and not to limit the scope of the claims, and many alternatives, modifications, and variations will be apparent to those skilled in the art.

## Claims

1. A method for providing a user interface (UI), comprising:
displaying a video;
selecting at least one from among a plurality of persons appearing in the video;
photographing a motion of a user;
calculating a motion similarity between the photographed motion of the user and a motion of the selected person; and
displaying information relating to the calculated motion similarity on the UI.

2. The method of claim 1, wherein the selecting comprises:
extracting information relating to the plurality of persons appearing in the video; and
displaying a list including the extracted information relating to the plurality of persons.

3. The method of claim 2, wherein, if the displayed video includes metadata regarding the plurality of persons, the displaying the list comprises displaying the information relating to the plurality of persons by using the metadata.

4. The method of claim 2, wherein the extracting comprises extracting the information relating to the plurality of persons appearing in the video by using facial recognition;
searching for a person matching a recognized face in a storage unit; and
if a person matching the recognized face is found, reading out information relating to the person matching the recognized face from the storage unit, and
the displaying the list includes displaying a list including the information relating to the person matching the recognized face.

5. The method of any of claims 1 to 4, wherein the calculating comprises calculating the motion similarity by comparing a motion vector of an area of the displayed video at which the selected person appears with a motion vector of an area of the photographed motion of the user.

6. The method of any of claims 1 to 4, wherein the calculating comprises:
analyzing the displayed video and extracting a characteristic point of the selected person;
extracting a characteristic point of the photographed user; and
calculating the motion similarity by comparing a motion with respect to the characteristic point of the selected person with a motion with respect to the characteristic point of the photographed user.

7. The method of any of claims 1 to 6, further comprising displaying a video regarding the photographed motion of the user on one area of a display screen.

8. The method of any of claims 1 to 7, wherein the displaying comprises displaying the selected person distinguishably from non-selected persons appearing in the video.

9. The method of any of claims 1 to 8, further comprising:
calculating information relating to an exercise of the photographed user; and
displaying the calculated information relating to the exercise of the photographed user on the UI.

10. The method of claim 9, further comprising storing at least one of: the information relating to the calculated motion similarity; information relating to the selected person; data relating to the photographed motion of the user; and the information relating to the exercise of the photographed user.

11. A video receiving apparatus, comprising:
a photographing unit which photographs a user;
a video receiving unit which receives a video;
a display unit which displays the received video;
a user input unit which receives at least one command from the user; and
a control unit which selects at least one from among a plurality of persons appearing in the video based on the received at least one command, calculates a motion similarity between a motion of the user which is photographed by using the photographing unit and a motion of the selected person, and controls the display unit to display information relating to the calculated motion similarity on a user interface (UI).

12. The video receiving apparatus of claim 11, wherein the control unit extracts information relating to the plurality of persons appearing in the video, generates a list including the extracted information relating to the plurality of persons, and displays the generated list on the display unit.

13. The video receiving apparatus of claim 12, wherein if the received video includes metadata regarding the plurality of persons, the control unit controls the display unit to display the information relating to the plurality of persons by using the metadata.

14. The video receiving apparatus of claim 12, further comprising a storage unit which stores information relating to persons,
wherein the control unit extracts the information relating to the plurality of persons appearing in the video by using facial recognition, searches for information relating to a person matching a recognized face in the storage unit, and if the information relating to the person matching the recognized face is found, reads out the information relating to the person matching the recognized face from the storage unit, and controls the display unit to display a list including the information relating to the person matching the recognized face.

15. The video receiving apparatus of any of claims 11 to 14, wherein the control unit calculates the motion similarity by comparing a motion vector of an area of the received video at which the selected person appears with a motion vector of an area of the photographed motion of the user.
